# EUROPEAN PATENT SPECIFICATION

(11) **EP 3 637 568 B1**
(45) Date of publication and mention of the grant of the patent: **17.11.2021**
(21) Application number: 17912835.0
(22) Date of filing: 06.06.2017
(51) Int. Cl.: H02B 1/56, H02B 13/025

(54) **HOUSING OF ELECTRICAL EQUIPMENT**
GEHÄUSE FÜR ELEKTRISCHE AUSRÜSTUNG
BOÎTIER D'ÉQUIPEMENT ÉLECTRIQUE

(43) Date of publication of application: 15.04.2020
(73) Proprietor: Mitsubishi Electric Corporation, Chiyoda-ku Tokyo 100-8310 (JP)
(72) Inventor: YUKI Hiroto, Tokyo 100-8310 (JP)
(74) Representative: Witte, Weller & Partner Patentanwälte mbB
(86) International application number: PCT/JP2017/020976
(87) International publication number: WO 2018/225153

(56) References cited:
- EP-A1- 2 145 365
- WO-A1-2008/136113
- CN-C- 1 312 711
- JP-A- 2007 202 232
- JP-A- 2011 259 600
- JP-A- 2011 259 655
- JP-U- S5 630 503
- KR-A- 20160 130 694
- US-A- 4 484 690
- US-A1- 2014 166 623

## Description

### TECHNICAL FIELD

The present invention relates to an electrical equipment housing in which electrical equipment such as a circuit breaker is stored.

### BACKGROUND ART

In a conventional example of an electrical equipment housing provided with an intake portion, a plate-shaped member having through holes is provided at an intake portion for ventilation. When high-temperature high-pressure gas is generated upon an internal short-circuit fault, the through holes formed in the plate-shaped member allow discharge of the high-temperature high-pressure gas. In the through holes, fluid energy loss of fluid moving in the discharge direction is set to be greater than fluid energy loss of fluid moving in the intake direction. The parts defining the through holes in the plate-shaped member are formed such that the shape coefficient for fluid energy loss in the discharge direction is greater than the shape coefficient for energy loss in the intake direction.

Document CN 1 312 711 C, according to its abstract, states an arc-suppressing chamber with a gas extinction device including an arc isolation wall containing multiple arc extinction gratin plates in it characterizing in setting at least two-layers of porous screens near the exit of the chamber, holes opened on the two adjacent screens arc staggered, multiple round free-erasing posts arc set between adjacent two screens above the holes of the screen inside the adjacent internal layers expressed in an arc face with the hole contact face. When the arc is interrupted in the chamber, the ionized gas passes through the porous screens and free-erasing posts layer by layer alternately to be cooled effectively. The diameter of the hole is different.

Document EP 2 145 365 A1, according to its abstract, states a partition apparatus for an electrical power distributor unit, having partition means for placing behind a casing part, which is provided with ventilation openings, of the electrical power distributor unit, in particular a switch panel door, wherein the partition means are designed such that, in normal operating conditions, they ensure an air flow through the ventilation openings in the interior of the electrical power distributor unit, or out of the interior of the electrical power distributor unit, and in the event of a fault, and under the influence of a pressure wave, cover the ventilation openings such that the pressure wave and hot gases are passed to the exterior in a greatly reduced form. In order to improve the resistance of the partition apparatus to mechanical damage at least one first metal partition sheet and one second metal partition sheet are provided as partition means, are each provided with aperture openings and are arranged one above the other, wherein the two metal partition sheets are curved in a convex form to different extents starting from the casing part which is provided with the ventilation openings, and wherein the radii of curvature of the metal partition sheets are variable by the metal partition sheets being bent under the influence of the pressure wave.

Document US 4 484 690 A, according to its abstract, states a flame arresting ventilated wall or panel for an explosion-proof enclosure comprises a stack of aluminum sheets apertured to provide a plurality of discrete, generally parallel gas flow channels disposed in crisscross patterns across the heights and widths of the sheets. Fasteners tie the sheets together into a rigid structure and are disposed in patterns surrounding and individually uniformly supporting the gas flow channels from the center of the sheets to their outer edge. Combinations of three different punched sheets are used, namely, first and second apertured sheets spaced apart by relatively thin separator sheets. Along each of the plurality of gas flow channels, each separtor sheet has a large window and the first and second apertured sheets have separate arrays of nine and sixteen flow holes, respectively, registered with the windows, each array having a total cross-sectional area about one-fourth of each corresponding window.

Document WO 2008/136113 A1, according to its abstract, states a metal-closed switch gear in which an electrical machine is housed inside a box having an inlet and an outlet. Inside the casing part of the box where the inlet is bored, an intra-board partition plate functioning as a ventilating partition plate having a vent hole opposed to the inlet is arranged apart from the casing part so that the intra-board partition plate may suppress discharging of a high-temperature ark gas from the inlet to the outside in occurrence of a short circuit in a cable chamber inside the box.

Document US 2014/166623 A1, according to its abstract, states that a muffler for enhanced arc protection is described. In the case of an internal arc event in an electrical enclosure, the muffler exhausts arc gas and plasma parallel to the enclosure surface, instead of directly forward where persons may be located. The muffler includes perforated plates and baffle plates in its interior space. The perforated plates have offset perforation patterns from one another, and the baffle plates are provided on opposing walls, causing the plasma and gas to make multiple directional changes. The perforated plates also filter the arc gas and plasma. These directional changes and filtering result in an energy reduction from the exhaust, which provides an increased margin of safety. In addition, the muffler provides an adequate level of ventilation in the enclosure, thus keeping the components cool.

Document KR 2016 0130694 A, according to its abstract, states that an arc control device for a load break switch comprises: a housing fixed in a primary side fixed contact side in contact with a movable contact of the load break switch, and including an inlet to receive arc generated in a fixed contact and an outlet to discharge the received arc; and an attenuation member made of an insulating material and an attenuation screen made of a metallic material installed on an arc flowing path in the housing to attenuate the arc received through the inlet and discharge the attenuated arc to an outlet side. Thus, equipment is effectively protected from arc discharge generated in a current cut-off operation without increasing a size of the load break switch.

### CITATION LIST

### PATENT DOCUMENT

Patent Document 1: Japanese Laid-Open Patent Publication No. 2011-259600

### SUMMARY OF THE INVENTION

### PROBLEMS TO BE SOLVED BY THE INVENTION

Increasing fluid energy loss in the discharge direction makes it possible to more prevent ejection of the high-temperature high-pressure gas, but causes a problem of requiring mechanical strength of the housing. In the case where a plurality of plate-shaped members are provided in an overlapping manner, due to the great fluid energy loss in the discharge direction, load is applied to the inner-side plate-shaped member when gas is ejected from inside, and thus the inner-side plate-shaped member is deformed to come into contact with the outer-side plate-shaped member. When the two plate-shaped members come into contact with each other, the space between the two plate-shaped members is reduced, so that it becomes difficult for ejected high-temperature high-pressure gas to be mixed with the outside air in the space between the plate-shaped members, thus causing a problem of decreasing cooling efficiency for the ejected gas.

An object of the present invention is to provide an electrical equipment housing which enables reduction in mechanical strength required for each plate-shaped member, prevents deformation of a part that allows gas discharge, and enables gas in the housing to be efficiently cooled.

### SOLUTION TO THE PROBLEMS

There is provided an electrical equipment housing comprising a ventilation portion that allows gas to pass between inside and outside, wherein the ventilation portion has a plurality of plate-shaped members provided in an overlapping manner so as to be spaced from each other with their thickness directions aligned with each other, the plurality of plate-shaped members each have a plurality of through holes penetrating through the plate-shaped member in the thickness direction, the plurality of through holes in each plate-shaped member are, as seen in the thickness direction, formed at positions shifted from the plurality of through holes in another plate-shaped member adjacent in the thickness direction, aperture rates of the plate-shaped members based on the pluralities of through holes are different from each other, of the plurality of plate-shaped members, the plate-shaped member on an inward side has a greater thickness than the plate-shaped member on an outward side, and the aperture rates of the plate-shaped members are set such that the plate-shaped member closer to an outward side of the ventilation portion has a greater aperture rate.

### EFFECT OF THE INVENTION

The electrical equipment housing according to the present invention enables reduction in mechanical strength required for each plate-shaped member, prevents deformation of a part that allows gas discharge, and enables gas in the housing to be efficiently cooled.

### BRIEF DESCRIPTION OF THE DRAWINGS

[FIG. 1] FIG. 1 is a front view of electrical equipment in an example useful for understanding of the present invention, and which is not under the scope of the claims.
[FIG. 2] FIG. 2 is an internal side view of the electrical equipment as opened along sectional line A-A in FIG. 1, in an example useful for understanding of the present invention , and which is not under the scope of the claims.
[FIG. 3] FIG. 3 is a perspective view of a ventilation portion in an example useful for understanding of the present invention, and which is not under the scope of the claims.
[FIG. 4] FIG. 4 is a perspective view of a plurality of plate-shaped members in an example useful for understanding of the present invention, and which is not under the scope of the claims.
[FIG. 5] FIG. 5 is a front view of the plurality of plate-shaped members in an example useful for understanding of the present invention, and which is not under the scope of the claims.
[FIG. 6] FIG. 6 is a front view of the ventilation portion in an example useful for understanding of the present invention , and which is not under the scope of the claims.
[FIG. 7] FIG. 7 is a sectional view of the ventilation portion taken along sectional line B―B in FIG. 6, in an example useful for understanding of the present invention , and which is not under the scope of the claims.
[FIG. 8] FIG. 8 is a sectional view of the plurality of plate-shaped members as seen in the lateral direction, in an example useful for understanding of the present invention, and which is not under the scope of the claims.
[FIG. 9] FIG. 9 is a perspective view of a plurality of plate-shaped members in embodiment 1 of the present invention.
[FIG. 10] FIG. 10 is a sectional view of the plurality of plate-shaped members as seen in the lateral direction, in embodiment 1 of the present invention.
[FIG. 11] FIG. 11 is a front view of a plurality of plate-shaped members in embodiment 2 of the present invention.

### DESCRIPTION OF EMBODIMENTS

Hereinafter, with reference to the drawings, several embodiments of the present invention will be described. In the following description, parts that correspond to matters having been already described in any embodiment preceding each embodiment are denoted by the same reference characters, and the same description thereof may be omitted. In the case where only a part of the configuration is described, the other part of the configuration is the same as that already described.

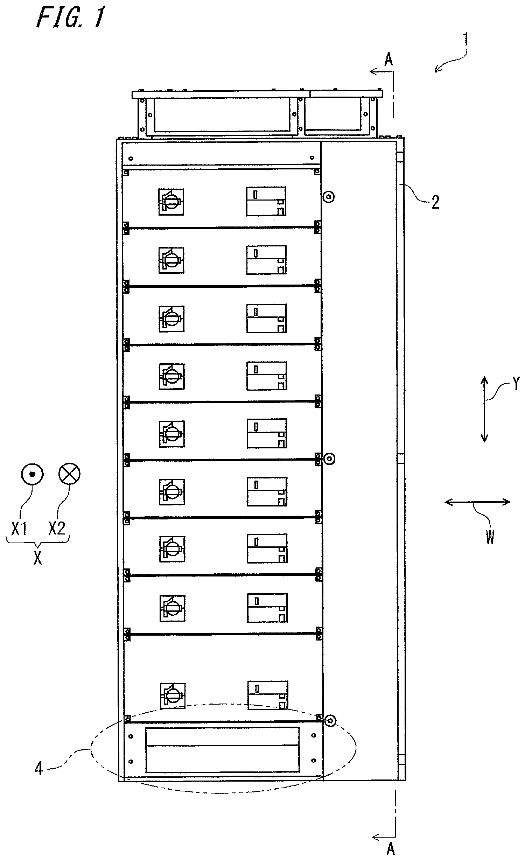

FIG. 1 is a front view of electrical equipment 1 according to an example useful for understanding of the present invention, and which is not included under the scope of the claims.

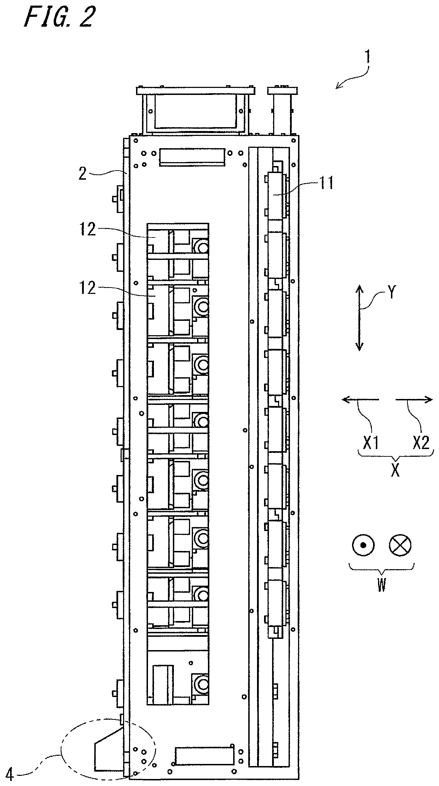

In FIG. 1, the position of a ventilation portion 4 is particularly indicated by a two-dot dashed line. FIG. 2 is an internal side view of the electrical equipment 1 as opened along sectional line A-A shown in FIG. 1, in an example useful for understanding of the present invention, and which is not included under the scope of the claims.

The electrical equipment 1 according to the present example, not included under the scope of the claims, is a switchboard as an example, and a housing 2 of the electrical equipment 1 stores a circuit breaker of the switchboard. In operation of the electrical equipment 1, although in rare case, a short-circuit fault may occur in a main circuit due to various causes such as aging deterioration of equipment, human error in maintenance inspection, and poor maintenance. When a short-circuit fault occurs, an arc is generated at the part where the short-circuit occurs. Then, due to the arc energy, the internal pressure is sharply increased inside the electrical equipment 1, whereby high-temperature high-pressure gas, i.e., so-called arc gas is generated. The housing 2 of the electrical equipment 1 is provided with the ventilation portion 4 for the purpose of ventilation and cooling. The ventilation portion 4 allows passage of gas, e.g., air and high-temperature high-pressure gas, between the inside and the outside of the housing 2 of the electrical equipment 1.

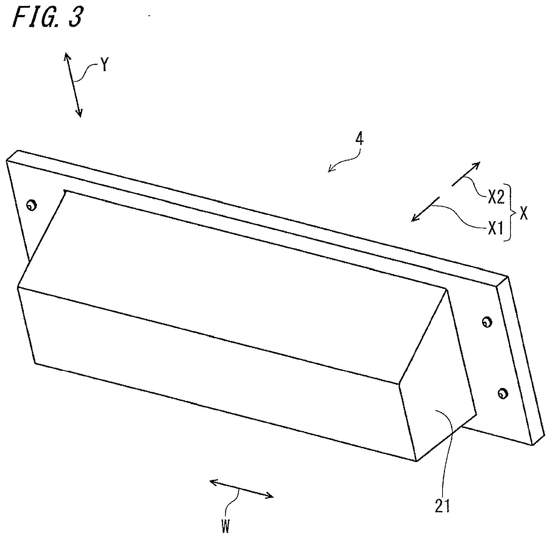

FIG. 3 is a perspective view of the ventilation portion 4 in an example useful for understanding of the present invention, and which is not included under the scope of the claims.

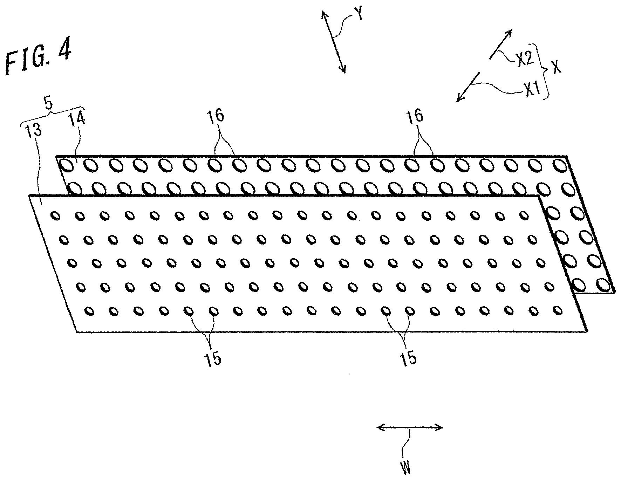

FIG. 4 is a perspective view of a plurality of plate-shaped members 5 in an example useful for understanding of the present invention, and which is not included under the scope of the claims.

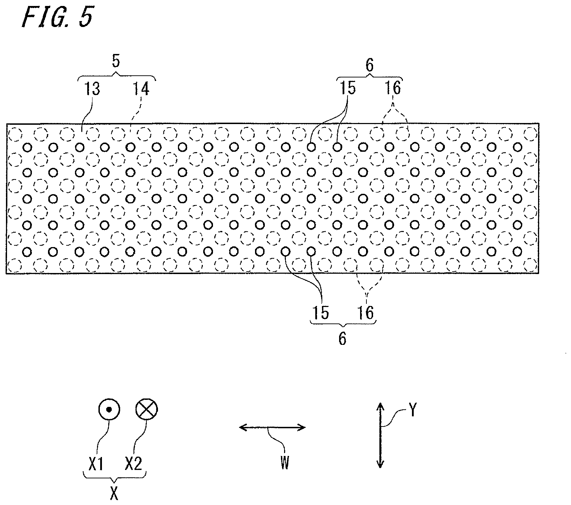

FIG. 5 is a front view of the plurality of plate-shaped members 5 in an example useful for understanding of the present invention, and which is not included under the scope of the claims. The ventilation portion 4 has the plurality of plate-shaped members 5, and the plurality of plate-shaped members 5 are provided in an overlapping manner so as to be spaced by a gap S with their thickness directions X aligned with each other. The side outward of the ventilation portion 4 is referred to as "one side X1 in the thickness direction", and the side inward of the ventilation portion 4 is referred to as "other side X2 in the thickness direction". In the present example, not included under the scope of the claims, the ventilation portion 4 is provided at a front part of the housing 2. Therefore, the one side X1 in the thickness direction coincides with the side frontward or outward of the housing 2, and the other side X2 in the thickness direction coincides with the side rearward or inward of the housing 2. Therefore, these sides may be referred to as frontward side X1 or outward side X1, and rearward side X2 or inward side X2. In the present example, not included under the scope of the claims, the ventilation portion 4 is provided with two plate-shaped members 5. Of the two plate-shaped members 5, the plate-shaped member 5 on the outward side X1 is referred to as "first plate-shaped member 13", and the plate-shaped member 5 on the inward side X2 is referred to as "second plate-shaped member 14".

The plurality of plate-shaped members 5 each have a plurality of through holes 6. The plurality of through holes 6 penetrate each plate-shaped member 5 in the thickness direction X. The through holes 6 formed in the first plate-shaped member 13 are referred to as "first through holes 15", and the through holes 6 formed in the second plate-shaped member 14 are referred to as "second through holes 16". As seen in the thickness direction X, the plurality of through holes 6 in each plate-shaped member 5 are formed at positions shifted from the plurality of through holes 6 in the other plate-shaped member 5 adjacent in the thickness direction X. That is, the first through holes 15 of the first plate-shaped member 13 and the second through holes 16 of the second plate-shaped member are formed at positions shifted from each other as seen in the thickness direction X. The aperture rates of the respective plate-shaped members 5 based on the through holes 6 are different from each other. In the present example, not included under the scope of the claims, the aperture rates of the plate-shaped members 5 are set such that the plate-shaped member 5 closer to the outward side X1 of the ventilation portion 4 has a smaller aperture rate. That is, the aperture rate of the first plate-shaped member 13 based on the first through holes 15 is set to be smaller than the aperture rate of the second plate-shaped member 14 based on the second through holes 16.

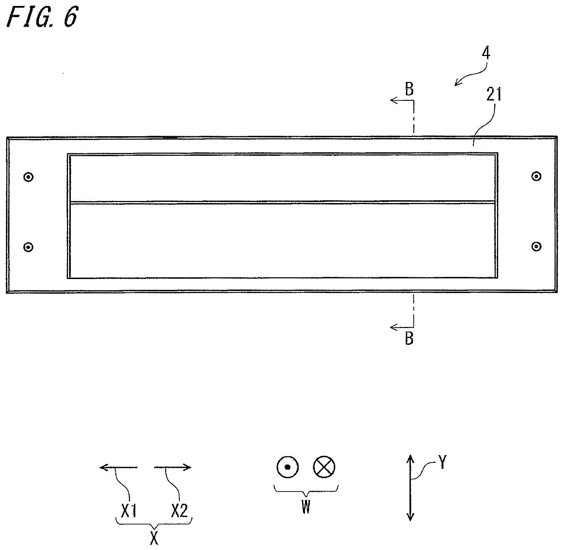

As shown in FIG. 2, inside the switchboard as the electrical equipment 1, a bus space 11 for storing a horizontal bus and a vertical bus is provided on the other side X2 (rearward side) in the thickness direction, and function units 12 for performing, for example, switching of a switch, are provided on the one side X1 (frontward side) in the thickness direction. As shown in FIG. 1, the ventilation portion 4 is provided at the lower part of the housing 2 of the electrical equipment 1. Hereinafter, the housing 2 of the electrical equipment 1 in the present invention is simply referred to as "housing 2". FIG. 6 is a front view of the ventilation portion 4 in an example useful for understanding of the present invention, and which is not included under the scope of the claims.

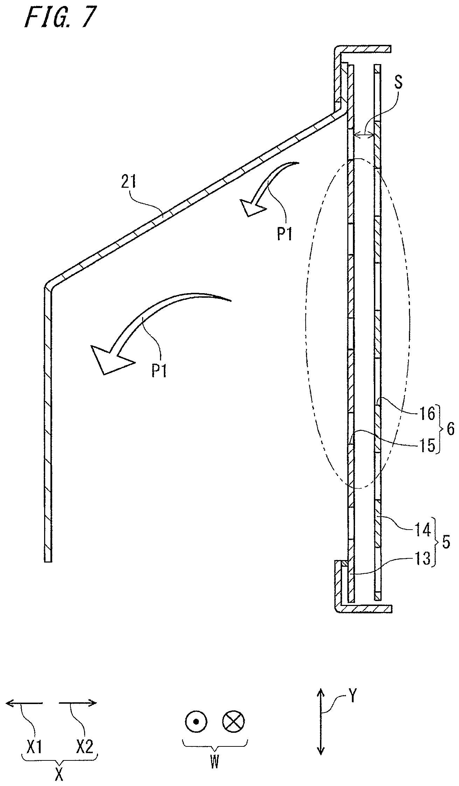

In addition, FIG. 6 is an enlarged view of the ventilation portion 4 indicated by the two-dot dashed line in FIG. 1. FIG. 7 is a sectional view of the ventilation portion 4 taken along sectional line B―B shown in FIG. 6, in an example useful for understanding of the present invention, and which is not included under the scope of the claims.

Of the ventilation portion 4, the structure of each plate-shaped member 5 will be particularly described. The ventilation portion 4 serves as an air passage for taking in air, during normal operation. The through holes 6 formed in each plate-shaped member 5 allow air to pass from the outward side X1 to the inward side X2. The first plate-shaped member 13 and the second plate-shaped member 14 are formed in a rectangular shape elongated in a lateral direction W as seen in the thickness direction X. The lateral direction W is the direction perpendicular to the thickness direction X and a vertical direction Y. Regarding the outer appearances, the shape and the size of the first plate-shaped member 13 are the same as the shape and the size of the second plate-shaped member 14. The thickness of the first plate-shaped member 13 is the same as the thickness of the second plate-shaped member 14. The first plate-shaped member 13 and the second plate-shaped member 14 are arranged with their thickness directions X aligned with each other, so that the one side X1 in the thickness direction is directed to the outward side X1 of the housing 2, and the other side X2 in the thickness direction is directed to the inward side X2 of the housing 2.

The first plate-shaped member 13 and the second plate-shaped member 14 each have the plurality of through holes 6. The first through holes 15 and the second through holes 16 are each formed in a round shape as seen in the thickness direction X. As shown in FIG. 4, the inner diameter of the first through holes 15 is smaller than the inner diameter of the second through holes 16.

The first through holes 15 and the second through holes 16 are formed so as to be arranged in the vertical direction Y and the lateral direction W. In the vertical direction Y, the number of the first through holes 15 per unit length is set to be equal to the number of the second through holes 16 per unit length. That is, the pitch of the first through holes 15 in the vertical direction Y is the same as the pitch of the second through holes 16. Also in the lateral direction W, the pitch of the first through holes 15 is set to be equal to the pitch of the second through holes 16.

Thus, the aperture rate of the first plate-shaped member 13 based on the first through holes 15 is set to be smaller than the aperture rate of the second plate-shaped member 14 based on the second through holes 16. In the case where three or more plate-shaped members 5 are provided, the aperture rate based on the through holes 6 is set to be greater for the plate-shaped member 5 closer to the inward side X2, and the aperture rate based on the through holes 6 is set to be smaller for the plate-shaped member 5 closer to the outward side X1.

In both of the vertical direction Y and the lateral direction W, the pitches of the first through holes 15 and the second through holes 16 are set to be equal to or greater than two times the inner diameter of the second through holes 16 formed in the second plate-shaped member 14 on the inward side X2. Thus, in both of the vertical direction Y and the lateral direction W, between the adjacent first through holes 15, a part forming the first plate-shaped member 13 exists as a part having a dimension equal to or greater than the inner diameter of the second through holes 16. Also regarding the second plate-shaped member 14, both in the vertical direction Y and the lateral direction W, between the adjacent second through holes 16, a part forming the second plate-shaped member exists as a part having a dimension equal to or greater than the inner diameter of the second through holes 16.

As shown in FIG. 5, in a state in which the first plate-shaped member 13 and the second plate-shaped member 14 are arranged in the ventilation portion 4, the first through holes 15 and the second through holes 16 are formed at positions shifted from each other when the first plate-shaped member 13 and the second plate-shaped member 14 are seen in the thickness direction X. Thus, when the first plate-shaped member 13 and the second plate-shaped member 14 are seen in the thickness direction X, the first through holes 15 and the second through holes 16 are located so as not to overlap each other. Therefore, gas passing through the first through holes 15 and the second through holes 16 in the thickness direction X does not linearly pass from the space on the inward side X2 of the second plate-shaped member 14 to the space on the outward side X1 of the first plate-shaped member 13.

Next, a phenomenon when short-circuit occurs in the electrical equipment 1, and the function of the ventilation portion 4 when short-circuit occurs, will be described. When short-circuit occurs in the electrical equipment 1 or at any part of an external circuit electrically connected to the circuit of the electrical equipment 1 and excessive current occurs in the circuit due to the short-circuit, high-temperature high-pressure gas is generated by arc energy in the electrical equipment 1. In order to prevent failure of the electrical equipment 1 and damage of the housing 2 due to instantaneous generation of the high-temperature high-pressure gas, the ventilation portion 4 allows discharge of the high-temperature high-pressure gas to the outside. Specifically, the through holes 6 formed in the plate-shaped members 5 allow gas to pass from the inward side X2 to the outward side X1, whereby the high-temperature high-pressure gas generated in the housing is discharged to the outside.

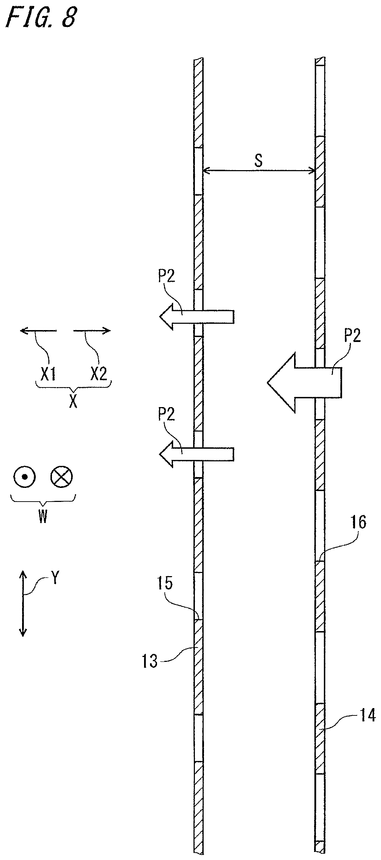

In FIG. 7, where an example not included under the scope of the claims is shown, a discharge path of the high-temperature high-pressure gas is indicated by arrows P1. FIG. 8 is a sectional view of the plurality of plate-shaped members 5 as seen in the lateral direction W in an example useful for understanding of the present invention , and which is not included under the scope of the claims.

In addition, FIG. 8 is an enlarged view of a part indicated by a two-dot dashed line in FIG. 7. Also in FIG. 8, as in FIG. 7, a discharge path of the high-temperature high-pressure gas is indicated by arrows P2. The high-temperature high-pressure gas generated on the inward side X2 of the second plate-shaped member 14 passes in the thickness direction X through the second through holes 16 formed in the second plate-shaped member 14. The high-temperature high-pressure gas having passed through the second through holes 16 blows to the part forming the first plate-shaped member 13. Therefore, the high-temperature high-pressure gas cannot linearly pass from the inward side X2 of the second plate-shaped member 14 to the outward side X1 of the first plate-shaped member 13.

Thus, the gas passing through the second through holes 16 from the inward side X2 to the outward side X1 of the housing 2 is mixed with gas existing in the gap S between the first plate-shaped member 13 and the second plate-shaped member 14, and then passes through the first plate-shaped member 13. In the case where three or more plate-shaped members 5 are provided, it suffices that two plate-shaped members 5 adjacent in the thickness direction X are configured such that the through holes 6 of these plate-shaped members 5 do not overlap each other as seen in the thickness direction X. For example, even if the through holes 6 of two plate-shaped members 5 located separately from each other on the inward side X2 and the outward side X1 with one plate-shaped member 5 therebetween are formed so as to overlap each other in the thickness direction X, linear movement of gas passing through the through holes 6 from the inward side X2 to the outward side X1 is prevented by the plate-shaped member 5 located therebetween.

During normal operation, the gas existing in the gap S between the first plate-shaped member 13 and the second plate-shaped member 14 is air at the room temperature. The air that has existed between the first plate-shaped member 13 and the second plate-shaped member 14 during normal operation is partially pushed out to the outward side X1 of the first through holes 15 by the high-temperature high-pressure gas from the inward side X2, when short-circuit occurs. The remaining air that has not been pushed out to the outward side X1 by the high-temperature high-pressure gas is mixed with the high-temperature high-pressure gas in the gap S between the first plate-shaped member 13 and the second plate-shaped member 14. The mixed gas of the high-temperature high-pressure gas and the air has a lower temperature as compared to the high-temperature high-pressure gas located on the inward side X2 of the second plate-shaped member 14.

Since the first plate-shaped member 13 and the second plate-shaped member 14 respectively allow passage of the high-temperature high-pressure gas through the plurality of first through holes 15 and the plurality of second through holes 16, pressure loss occurs when the gas passes. Therefore, the pressure on the inward side X2 of the second plate-shaped member 14 is not directly propagated to the outside of the housing 2. The greater the pressure loss occurring in the passing gas is, the greater the pressure applied to the first plate-shaped member 13 and the second plate-shaped member 14 by the air is. In addition, the plate-shaped member 5 closer to the inward side X2, which is closer to the generation source of the high-temperature high-pressure gas, is subjected to a greater pressure from the high-temperature high-pressure gas than the plate-shaped member 5 on the outward side X1.

If rigidity of the plate-shaped member 5 is low, the center part of the plate-shaped member 5 is pushed to the outward side X1 and is greatly deformed when subjected to the pressure from the high-temperature high-pressure gas. Thus, the plate-shaped member 5 undergoes elastic deformation or plastic deformation. When the center part of the second plate-shaped member 14 is displaced to the outward side X1, the volume of the gap S between the first plate-shaped member 13 and the second plate-shaped member 14 is reduced. As a result, the amount of air to be mixed with the high-temperature high-pressure gas that has passed through the second plate-shaped member 14 from the inward side X2 to the outward side X1 decreases, so that cooling efficiency for the high-temperature high-pressure gas is reduced.

In order to reduce deformation of the plate-shaped member 5 caused when the plate-shaped member 5 is subjected to the pressure from the high-temperature high-pressure gas, it is necessary to increase the rigidity of the plate-shaped member 5 or reduce pressure loss due to the plate-shaped member 5 when the high-temperature high-pressure gas passes through the through holes 6 of the plate-shaped member 5. In the present example, not included under the scope of the claims, the first plate-shaped member 13 having a smaller aperture rate than the aperture rate of the second plate-shaped member 14 is provided on the outward side X1 of the second plate-shaped member 14, whereby pressure loss due to the second plate-shaped member 14 is reduced and thus rigidity required for the second plate-shaped member 14 is reduced.

As described above, in the present example, not included under the scope of the claims, the pressure of gas passing from the inward side X2 to the outward side X1 of the ventilation portion 4 is reduced stepwise by the second through holes 16 of the second plate-shaped member 14 and the first through holes 15 of the first plate-shaped member 13. Thus, the pressure is prevented from being concentrated on the second plate-shaped member 14 located on the inward side X2 of the housing 2.

Next, a hood 21 provided to the ventilation portion 4 will be described. In the ventilation portion 4, the hood 21 covers the first plate-shaped member 13 and the second plate-shaped member 14 from the outward side X1. The hood 21 changes the advancement direction of gas discharged through the ventilation portion 4. Specifically, the hood 21 changes the advancement direction of the high-temperature high-pressure gas passing through the through holes 6 of the plate-shaped members 5 from the inward side X2 to the outward side X1 of the ventilation portion 4, to a direction perpendicular to the thickness direction X of the plate-shaped member 5. The "perpendicular direction" may be, for example, a direction toward one side in the vertical direction Y, or a direction toward one side in the lateral direction W. This direction is optionally selected in accordance with the environment in which the electrical equipment 1 is installed. It is not preferable that, when short-circuit occurs, the high-temperature high-pressure gas is ejected toward a passage that can serve as a conveyance path for devices other than the electrical equipment 1.

In the present example, not included under the scope of the claims, the ventilation portion 4 is provided at a lower part of the housing 2 which is close to the floor. Therefore, the hood 21 changes the advancement direction of the high-temperature high-pressure gas advancing through the plate-shaped members 5 from the inward side X2 to the outward side X1, to a direction of advancing downward. In the case where the ventilation portion 4 is provided at a part of the housing 2 that is close to the ceiling, the hood 21 may be configured to change the advancement direction of the high-temperature high-pressure gas ejected from the inward side X2, to a direction of advancing upward. In the case where the ventilation portion 4 is provided at a position closer to the right or left wall than the housing 2, the hood 21 may be configured to change the advancement direction of the high-temperature high-pressure gas ejected from the inward side X2, to a direction of advancing toward the wall. The discharge direction of the high-temperature high-pressure gas is set to an appropriate direction in accordance with the direction of the opening of the hood 21.

The hood 21 not only has a function of directing, to an optional direction, the high-temperature high-pressure gas ejected through the first plate-shaped member 13 and the second plate-shaped member 14 from the inward side X2 to the outward side X1 of the housing, but also contributes to cooling for the high-temperature high-pressure gas. The high-temperature high-pressure gas having passed through the first plate-shaped member 13 from the inward side X2 to the outward side X1 passes through the space that is on the inward side X2 of the hood 21 and on the outward side X1 of the first plate-shaped member 13. Thus, the flow path for the high-temperature high-pressure gas to be discharged to the outward side X1 of the housing 2 is elongated, so that the time period until the high-temperature high-pressure gas is discharged is prolonged. In addition, the high-temperature high-pressure gas is mixed with air in the space that is on the inward side X2 of the hood 21 and on the outward side X1 of the first plate-shaped member 13. In this way, providing the hood 21 allows the high-temperature high-pressure gas to be further cooled until the high-temperature high-pressure gas is discharged from the housing 2.

In the configuration as described above in an example useful for understanding the invention, and which is not included under the scope of the claims, since the plurality of plate-shaped members 5 are provided, when high-temperature high-pressure gas is generated inside, the pressure of the high-temperature high-pressure gas can be gradually reduced by the plurality of plate-shaped members 5 from the inward side X2 to the outward side X1 of the ventilation portion 4. In addition, the plurality of through holes 6 of each plate-shaped member 5 are formed at positions shifted from the plurality of through holes 6 of another plate-shaped member 5 adjacent in the thickness direction X, whereby the high-temperature high-pressure gas can be prevented from being linearly ejected from the inward side X2 to the outward side X1 of the ventilation portion 4. In addition, gas flowing out from the plate-shaped member 5 on the inward side X2 of the ventilation portion 4 toward the outward side X1 of the ventilation portion 4 is mixed with air having the same temperature as the outside air, in the gap S between the plate-shaped members 5, and thus is cooled. Since the aperture rates of these plate-shaped members are different from each other, roles as to mechanical strength, pressure loss of flowing air, cooling efficiency, and the like can be divided between the plate-shaped member 5 located on the inward side X2 and the plate-shaped member 5 located on the outward side X1. Therefore, reduction in mechanical strength required for each plate-shaped member 5 and prevention of deformation of the ventilation portion 4, and cooling of ejected high-temperature high-pressure gas, can be both achieved efficiently.

In addition, in an example useful for understanding the invention, and which is not included under the scope of the claims, the aperture rates of the plate-shaped members are set such that the plate-shaped member closer to the outward side of the ventilation portion has a smaller aperture rate. Therefore, the pressure loss can be gradually increased from the inward side X2 toward the outward side X1 of the ventilation portion 4. Thus, load due to the pressure of the generated high-temperature high-pressure gas can be prevented from being concentrated on the plate-shaped member 5 on the inward side X2. Accordingly, shock by generation of the high-temperature high-pressure gas can be relaxed. Therefore, mechanical strength required for each plate-shaped member 5 can be reduced, deformation of the ventilation portion 4 can be prevented, and ejected high-temperature high-pressure gas can be efficiently cooled.

In addition, in an example useful for understanding the invention, and which is not included under the scope of the claims, the advancement direction of gas discharged through the ventilation portion 4 is changed by the hood 21. Therefore, when the high-temperature high-pressure gas is discharged, the high-temperature high-pressure gas can be prevented from adversely affecting another device near the electrical equipment 1. In addition, by providing the hood 21, the flow path for the high-temperature high-pressure gas to be discharged to the outward side X1 of the housing 2 is elongated as compared to the case of not providing the hood 21, and thus the time period until the high-temperature high-pressure gas is discharged is prolonged. Thus, cooling efficiency for the high-temperature high-pressure gas can be improved. In addition, the high-temperature high-pressure gas is mixed with air in the space that is on the inward side X2 of the hood 21 and on the outward side X1 of the first plate-shaped member 13. Therefore, the high-temperature high-pressure gas can be cooled by the air, by the time when the gas is discharged to the outward side X1 of the hood 21.

### Embodiment 1

Next, a housing 2 of electrical equipment 1 according to embodiment 1 of the present invention will be described with reference to the drawings. Embodiment 1 is similar to the example useful for understanding described above. Hereinafter, difference of embodiment 1 from the example useful for understanding will be mainly described.

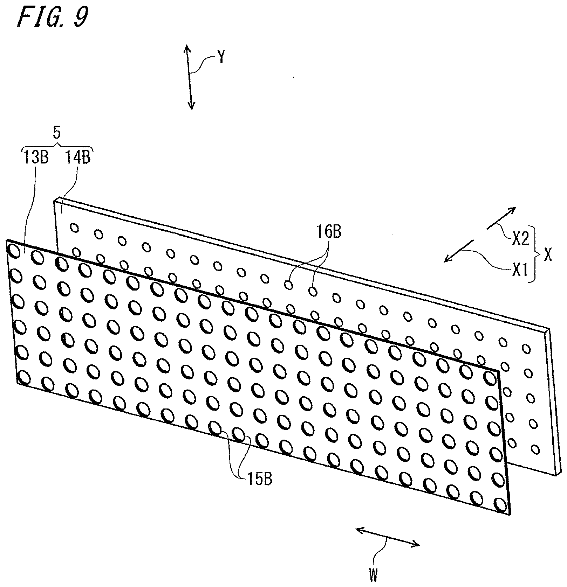

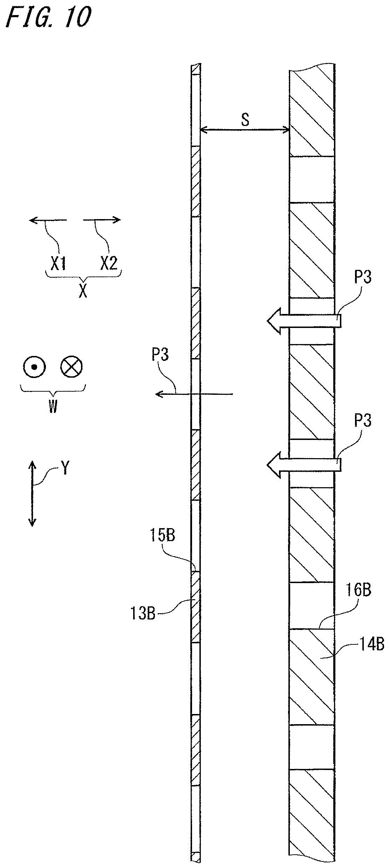

FIG. 9 is a perspective view of a plurality of plate-shaped members 5 in embodiment 1 of the present invention. FIG. 10 is a sectional view of the plurality of plate-shaped members 5 as seen in the lateral direction W, in embodiment 1 of the present invention. In embodiment 1, the aperture rates of the plate-shaped members 5 based on the through holes 6 are set such that the plate-shaped member 5 closer to the outward side X1 of the ventilation portion 4 has a greater aperture rate. The ventilation portion 4 in the present embodiment is provided with two plate-shaped members 5. Of the two plate-shaped members 5, the plate-shaped member 5 on the outward side X1 is referred to as "first plate-shaped member 13B", and the plate-shaped member 5 on the inward side X2 is referred to as "second plate-shaped member 14B".

Regarding the outer appearances of the first plate-shaped member 13B and the second plate-shaped member 14B as seen in the thickness direction X, both of them are formed in the same shape and the same size and have a rectangular shape, as in the above example useful for understanding. The thickness of the second plate-shaped member 14B in the present embodiment is set to be greater than the thickness of the first plate-shaped member 13B. The through holes 6 formed in the first plate-shaped member 13B are referred to as "first through holes 15B", and the through holes 6 formed in the second plate-shaped member 14B are referred to as "second through holes 16B". The first through holes 15B and the second through holes 16B have a round shape as seen in the thickness direction X. As shown in FIG. 9, the inner diameter of the first through holes 15B is greater than the inner diameter of the second through holes 16B.

In both of the vertical direction Y and the lateral direction W, the pitches of the first through holes 15B and the second through holes 16B are set to be equal to or greater than two times the inner diameter of the first through holes 15B formed in the first plate-shaped member 13B on the outward side X1. Thus, in both of the vertical direction Y and the lateral direction W, between the adjacent first through holes 15B, a part forming the first plate-shaped member 13B exists as a part having a dimension equal to or greater than the inner diameter of the first through holes 15B. Also regarding the second plate-shaped member 14B, both in the vertical direction Y and the lateral direction W, between the adjacent second through holes 16B, a part forming the second plate-shaped member 14B exists as a part having a dimension equal to or greater than the inner diameter of the first through holes 15B.

In a state in which the first plate-shaped member 13B and the second plate-shaped member 14B are arranged in the ventilation portion 4, the first through holes 15B and the second through holes 16B are formed at positions shifted from each other when the first plate-shaped member 13B and the second plate-shaped member 14B are seen in the thickness direction X. Thus, when the first plate-shaped member 13B and the second plate-shaped member 14B are seen in the thickness direction X, the first through holes 15B and the second through holes 16B are located so as not to overlap each other. Therefore, gas passing through the first through holes 15B and the second through holes 16B in the thickness direction X does not linearly pass from the space on the inward side X2 of the second plate-shaped member 14B to the space on the outward side X1 of the first plate-shaped member 13B.

Next, the function of the ventilation portion 4 when short-circuit of the electrical equipment 1 occurs will be described. FIG. 10 shows, by arrows P3, high-temperature high-pressure gas passing through the second through holes 16B and the first through holes 15B when short-circuit occurs. The inner diameter of the second through holes 16B is set to be smaller than the inner diameter of the first through holes 15B. Therefore, pressure loss due to the second plate-shaped member 14B for high-temperature high-pressure gas passing through the second plate-shaped member 14B is greater than pressure loss due to the first plate-shaped member 13B. Thus, the second plate-shaped member 14B is subjected to a greater pressure from the inward side X2 toward the outward side X1 than the first plate-shaped member 13B. The second plate-shaped member 14B has a greater thickness than the first plate-shaped member 13B, so that the second plate-shaped member 14B has a sufficient mechanical strength to withstand the pressure from the inward side X2 when short-circuit occurs. Since the second plate-shaped member 14B is thicker than the first plate-shaped member 13B, the distance by which air passes through the second through hole 16B in the thickness direction X is longer than the distance by which air passes through the first through hole 15B in the thickness direction X. Also by this, the pressure loss due to the second plate-shaped member 14B becomes greater than the pressure loss due to the first plate-shaped member 13B.

In the case where pressure loss due to the second plate-shaped member 14B when high-temperature high-pressure gas passes is set to be greater than pressure loss due to the first plate-shaped member 13B, the rate of air to be replaced with the high-temperature high-pressure gas in the gap S between the first plate-shaped member 13B and the second plate-shaped member 14B when short-circuit occurs is reduced as compared to the opposite case. Therefore, the amount of air left in the gap S increases. Thus, in the gap S between the first plate-shaped member 13B and the second plate-shaped member 14B, the air ratio between the high-temperature high-pressure gas and the air that are mixed is increased. Therefore, cooling efficiency for the high-temperature high-pressure gas is enhanced as compared to the case where pressure loss due to the second plate-shaped member 14B is set to be smaller than pressure loss due to the first plate-shaped member 13B.

The air present in the gap S between the first plate-shaped member 13B and the second plate-shaped member 14B continues to be constantly replaced with the outside air during normal operation of the electrical equipment 1. Since the aperture rate of the first plate-shaped member 13B is set to be great, the outside air readily enters the gap S as compared to the case where the aperture rate of the first plate-shaped member 13B is small. Therefore, the greater the aperture rate of the first plate-shaped member 13B is, the more likely the air present in the gap S is replaced with the air on the outward side X1 of the first plate-shaped member 13B.

When the electrical equipment 1 is operating, the temperature inside the housing 2 is usually higher than the temperature of the outside air. Therefore, the air present in the gap S between the first plate-shaped member 13B and the second plate-shaped member 14B is maintained well in a low-temperature state if the air is likely to be replaced with the air on the outward side X1. Since the aperture rate of the first plate-shaped member 13B is set to be high, the air present in the gap S between the first plate-shaped member 13B and the second plate-shaped member 14B is readily maintained at a low temperature. Since the air in the gap S is maintained at a low temperature, it is possible to efficiently perform cooling in the gap S between the first plate-shaped member 13B and the second plate-shaped member 14B when short-circuit occurs. As described above, in the present embodiment, mechanical strength and pressure loss of passing gas are borne by the second plate-shaped member 14B on the inward side X2 of the housing 2, and cooling efficiency is borne by the first plate-shaped member 13B on the outward side X1 of the housing 2. In the case where three or more plate-shaped members 5 are provided, the aperture rate of the plate-shaped member 5 closer to the inward side X2 is set to be smaller, and the plate-shaped member 5 closer to the inward side X2 is formed by a thicker member having higher rigidity.

Owing to such a configuration in embodiment 1, a plurality of functions needed in the ventilation portion 4, i.e., mechanical strength, pressure loss, and cooling efficiency, can be divided between the plate-shaped member 5 on the inward side X2 and the plate-shaped member 5 on the outward side X1. In the present embodiment, pressure loss of the high-temperature high-pressure gas flowing out from the inside is greater at the plate-shaped member 5 closer to the inward side X2 of the ventilation portion 4. Therefore, replacement with high-temperature high-pressure gas is less likely to occur in the gap S closer to the outward side X1 of the ventilation portion 4, among the gaps S present on the inward sides X2 of the respective plate-shaped members 5. Thus, cooling efficiency in the gap S between the plate-shaped members 5 can be enhanced as compared to the case where the aperture rate is set to be smaller for the plate-shaped member 5 closer to the outward side X1 of the ventilation portion 4. In this way, mechanical strength and pressure loss of air that flows out are assigned to the plate-shaped member 5 on the ventilation portion 4 side, and cooling efficiency is assigned to the plate-shaped member 5 on the outward side X1 of the ventilation portion 4, whereby different roles are assigned among the plurality of plate-shaped members 5.

### Embodiment 2

Next, a housing 2 of electrical equipment 1 according to embodiment 2 of the present invention will be described with reference to the drawings. Embodiment 2 is similar to the example useful for understanding described above. Hereinafter, difference of embodiment 2 from the example useful for understanding will be described.

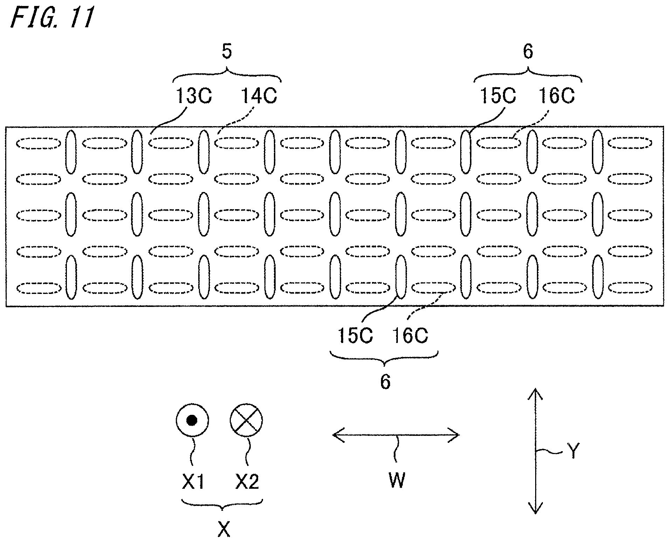

FIG. 11 is a front view of a plurality of plate-shaped members 5 in embodiment 2 of the present invention. As in the above example useful for understanding, the outer shapes of the plurality of plate-shaped members 5 are designed to be a rectangular shape as seen in the thickness direction X. A plurality of through holes 6 of at least one of the plurality of plate-shaped members 5 are formed in a shape elongated in parallel to the long-side direction of the plate-shaped member 5. The ventilation portion 4 in the present embodiment is provided with two plate-shaped members 5. Of the two plate-shaped members 5, the plate-shaped member 5 on the outward side X1 is referred to as "first plate-shaped member 13C", and the plate-shaped member 5 on the inward side X2 is referred to as "second plate-shaped member 14C".

The first plate-shaped member 13C and the second plate-shaped member 14C are arranged with their long-side directions aligned with the lateral direction W of the electrical equipment 1. Regarding the outer appearance, the shape and the size of the first plate-shaped member 13C are the same as the shape and the size of the second plate-shaped member 14C. The through holes 6 formed in the first plate-shaped member 13C are referred to as "first through holes 15C", and the through holes 6 formed in the second plate-shaped member 14C are referred to as "second through hole 16C". The first through holes 15C are formed in a shape elongated in the short-side direction of the first plate-shaped member 13C, i.e., the vertical direction Y. The second through holes 16C are formed in a shape elongated in the long-side direction of the second plate-shaped member 14C, i.e., the lateral direction W. In comparison between one first through hole 15C and one second through hole 16C, the shapes and the sizes are the same, but the formation directions are different.

In general, when a force is applied to a rectangular plate-shaped member so as to deform the center part thereof in the thickness direction X, the center part is readily deformed relative to both ends in the long-side direction, but is less likely to deform relative to both ends in the short-side direction. In other words, a force needed for bending to deform the center part relative to both ends in the long-side direction is smaller than a force needed for bending to deform the center part relative to both ends in the short-side direction. Therefore, in the present embodiment, also when the first plate-shaped member 13C and the second plate-shaped member 14C are subjected to the pressure from the high-temperature high-pressure gas, the center parts of the first plate-shaped member 13C and the second plate-shaped member 14C are readily deformed relative to both ends in the long-side direction of each plate-shaped member 5. Hereinafter, bending to deform the center part relative to both ends in the long-side direction is referred to as "long-side bending", and bending to deform the center part relative to both ends in the short-side direction is referred to as "short-side bending".

If the through holes 6 have a round shape, rigidity of the plate-shaped member 5 decreases as the aperture rate increases. In the present embodiment, by forming the through holes 6 so as to be elongated in the long-side direction, mechanical strength against long-side bending is maintained at a high level and a high aperture rate is ensured, as compared to the case where the through holes 6 are formed in a round shape or a shape elongated in the short-side direction. Among the plurality of plate-shaped members 5, one of the plate-shaped members 5 other than the one closest to the outward side X1 is made to have such a configuration. In the present embodiment, the plate-shaped member 5 closest to the inward side X2 is made to have such a configuration.

Thus, it is possible to achieve the plate-shaped member 5 having a great aperture rate and having high mechanical strength against long-side bending. In the present embodiment, the first through holes 15C are formed in a shape elongated in the short-side direction. However, it suffices that the first through holes 15C do not overlap the second through holes 16C as seen in the thickness direction X. Therefore, for example, the first through holes 15C may be formed in a round shape, or may be formed in a shape elongated in the long-side direction.

In the configuration as described above in embodiment 2, at least one plate-shaped member 5 has through holes 6 formed in a shape elongated in the long-side direction. Therefore, as compared to the case of forming through holes 6 in a shape elongated in the short-side direction under the same aperture rate, it is possible to enhance rigidity against bending stress of pressing the long-side-direction center part in the thickness direction X relative to both ends in the long-side direction. Thus, owing to the shape of the through holes 6 formed in the plate-shaped member 5, reduction in rigidity due to increase in the aperture rate can be suppressed.

The number and the size of the through holes 6 formed in each plate-shaped member 5, the aperture rate of each plate-shaped member 5, and the like are not limited to those shown in the drawings, but may be freely changed, as long as these fall within the scope of the claims. In the example useful for understanding (which is not included under the scope of the claims) and embodiments 1 and 2 of the present invention, the case of providing two plate-shaped members 5 to the ventilation portion 4 has been described. However, three or more plate-shaped members 5 may be provided. In the case of providing three or more plate-shaped members 5 in a configuration similar to an example useful for understanding or embodiment 1, the aperture rates are set to be sequentially changed from the inward side X2 toward the outward side X1. In the case of providing three or more plate-shaped members 5 in a configuration similar to embodiment 1, the aperture rates and the thicknesses of the plate-shaped members 5 are set to be sequentially changed from the inward side X2 toward the outward side X1. In this way, roles as to mechanical strength, pressure loss, and cooling efficiency can be divided between the plate-shaped member 5 on the inward side X2 and the plate-shaped member 5 on the outward side X1. Thus, it is possible to achieve the housing 2 of the electrical equipment 1 which enables reduction in mechanical strength required for each plate-shaped member 5, prevents deformation of a part that allows gas discharge, and enables ejected high-temperature high-pressure gas to be efficiently cooled.

The above embodiments are merely examples for embodying technology of the present invention, and are not intended to limit the technical scope of the present invention. Within the scope of the present invention, the above embodiments may be freely combined with each other, or each of the above embodiments may be modified or simplified as appropriate as long as these fall within the scope of the claims.

## Claims

1. An electrical equipment housing (2) comprising a ventilation portion(4) that allows gas to pass between inside and outside, wherein
the ventilation portion(4) has a plurality of plate-shaped members(13B,14B) provided in an overlapping manner so as to be spaced from each other with their thickness directions(X) aligned with each other,
the plurality of plate-shaped members(13B,14B) each have a plurality of through holes(15B,16B) penetrating through the plate-shaped member(13B,14B) in the thickness direction (X),
the plurality of through holes(16B) in each plate-shaped member(14B) are, as seen in the thickness direction(X), formed at positions shifted from the plurality of through holes(15B) in another plate-shaped member(13B) adjacent in the thickness direction(X),
aperture rates of the plate-shaped members(13B,14B) based on the pluralities of through holes(15B,16B) are different from each other,
of the plurality of plate-shaped members(13B,14B), the plate-shaped member(14B) on an inward side has a greater thickness than the plate-shaped member(13B) on an outward side, and
the aperture rates of the plate-shaped members(13B,14B) are set such that the plate-shaped member(13B) closer to an outward side of the ventilation portion(4) has a greater aperture rate.

2. The electrical equipment housing (2) according to claim 1, wherein
outer shapes of the plurality of plate-shaped members(13C,14C) are formed in a rectangular shape as seen in the thickness direction(X), and
the plurality of through holes(16C) formed in at least one of the plurality of plate-shaped members(14C) are formed in a shape elongated in parallel to a long-side direction(W) of the plate-shaped member(14C).

3. The electrical equipment housing (2) according to claims 1 or 2, wherein
the ventilation portion(4) includes a hood(21) covering the plurality of plate-shaped members(13,14) from an outward side(X1), and
the hood(21) changes an advancement direction of gas discharged through the ventilation portion(4).

## Patentansprüche

1. Gehäuse (2) für elektrisches Gerät, mit einem Ventilationsabschnitt (4), der Gas ermöglicht, zwischen einem Inneren und einem Äußeren hindurchzutreten, wobei
der Ventilationsabschnitt (4) eine Mehrzahl von plattenförmigen Elementen (13B, 14B) aufweist, die in überlappender Weise bereitgestellt sind, so dass sie voneinander beabstandet sind mit ihren Dickenrichtungen (X) zueinander ausgerichtet,
die Mehrzahl von plattenförmigen Elementen (13B, 14B) jeweils eine Mehrzahl von Durchgangslöchern (15B, 16B) aufweist, die durch das plattenförmige Element (13B, 14B) in die Dickenrichtung (X) durchtreten,
die Mehrzahl von Durchgangslöchern (16B) in jedem plattenförmigen Element (14B), in der Dickenrichtung (X), an Positionen ausgebildet sind, die von der Mehrzahl von Durchgangslöchern (15B) in einem anderen plattenförmigen Element (13B) benachbart in der Dickenrichtung (X) versetzt sind,
Aussparungsraten der plattenförmigen Elemente (13B, 14B) basierend auf der Mehrzahl von Durchgangslöchern (15B, 16B), verschieden voneinander sind,
von der Mehrzahl von plattenförmigen Elementen (13B, 14B), das plattenförmige Element (14B) auf einer Innenseite eine größere Dicke als das plattenförmige Element (13B) auf einer Außenseite aufweist, und
die Aussparungsraten der plattenförmigen Elemente (13B, 14B) derart festgesetzt sind, dass das plattenförmige Element (13B) näher an einer Außenseite des Ventilationsabschnitts (4) eine größere Aussparungsrate aufweist.

2. Gehäuse (2) für elektrisches Gerät nach Anspruch 1, wobei
äußere Formen der Mehrzahl von plattenförmigen Elementen (13C, 14C) betrachtet in der Dickenrichtung (X) in einer rechteckigen Form ausgebildet sind, und
die Mehrzahl von Durchgangslöchern (16C), die in zumindest einem der Mehrzahl von plattenförmigen Elementen (14C) ausgebildet ist, in einer Form langgestreckt parallel zu einer Längsseitenrichtung (W) des plattenförmigen Elements (14C) ausgebildet sind.

3. Gehäuse (2) für elektrisches Gerät nach Anspruch 1 oder 2, wobei
der Ventilationsabschnitt (4) eine Abdeckung (21) aufweist, die die Mehrzahl von plattenförmigen Elementen (13, 14) von einer Außenseite (X1) abdeckt, und
die Abdeckung (21) eine Vorbewegungsrichtung von Gas ändert, das durch den Ventilationsabschnitt (4) ausgelassen wird.

## Revendications

1. Boîtier d'équipement électrique (2) comprenant une partie de ventilation (4) qui permet au gaz de passer entre l'intérieur et l'extérieur,
la partie de ventilation (4) ayant une pluralité d'éléments en forme de plaque (13B, 14B) disposés de manière à se chevaucher de sorte à être espacés les uns des autres, leurs directions d'épaisseur (X) étant alignées les unes avec les autres,
la pluralité d'éléments en forme de plaque (13B, 14B) ayant chacun une pluralité de trous traversants (15B, 16B) pénétrant à travers l'élément en forme de plaque (13B, 14B) dans la direction d'épaisseur (X),
la pluralité de trous traversants (16B) dans chaque élément en forme de plaque (14B) étant, comme vu dans la direction d'épaisseur (X), formés à des positions décalées par rapport à la pluralité de trous traversants (15B) dans un autre élément en forme de plaque (13B) adjacent dans la direction d'épaisseur (X),
les taux d'ouverture des éléments en forme de plaque (13B, 14B) basés sur les pluralités de trous traversants (15B, 16B) étant différents les uns des autres,
parmi la pluralité d'éléments en forme de plaque (13B, 14B), l'élément en forme de plaque (14B) sur un côté intérieur ayant une plus grande épaisseur que l'élément en forme de plaque (13B) sur un côté extérieur, et
les taux d'ouverture des éléments en forme de plaque (13B, 14B) étant réglés de sorte que l'élément en forme de plaque (13B) plus proche d'un côté extérieur de la partie de ventilation (4) ait un taux d'ouverture plus grand.

2. Boîtier d'équipement électrique (2) selon la revendication 1,
les formes extérieures de la pluralité d'éléments en forme de plaque (13C, 14C) étant formées en une forme rectangulaire comme vu dans la direction d'épaisseur (X), et
la pluralité de trous traversants (16C) formés dans au moins un de la pluralité d'éléments en forme de plaque (14C) étant formés dans une forme allongée parallèlement à une direction de côté long (W) de l'élément en forme de plaque (14C).

3. Boîtier d'équipement électrique (2) selon la revendication 1 ou 2,
la partie de ventilation (4) comprenant un capot (21) couvrant la pluralité d'éléments en forme de plaque (13, 14) depuis un côté extérieur (X1), et
le capot (21) modifiant une direction d'avancement du gaz évacué à travers la partie de ventilation (4).
